# EUROPEAN PATENT APPLICATION

(11) **EP 1 947 067 A1**
(43) Date of publication of application: **23.07.2008**
(21) Application number: 06812684.6
(22) Date of filing: 17.10.2006
(51) Int. Cl.: C04B 28/04, C04B 16/06

(54) **FORMULATION FOR OBTAINING A FIBRE-REINFORCED CONCRETE MIXTURE WITH HIGH MECHANICAL STRENGTH AND LOW VOLUME WEIGHT**

(30) Priority: 17.10.2005 MX PA05011138
(71) Applicant: Concretos Translúcidos, S. de R.L. de C.V., C.P. 01020, México (MX)
(72) Inventor: GALVÁN CÁZARES, Sergio Omar, C.P. 01020, México, D.F. (MX); SOSA GUTIÉRREZ, Joel, C.P. 01020, México, D.F. (MX)
(74) Representative: Ungria Lopez, Javier
(86) International application number: PCT/MX2006/000110
(87) International publication number: WO 2007/046681

(57) **Abstract**

A method for obtaining a fibre-reinforced concrete with high strength and low volume weigth. The concrete mixture has greater mechanical strength properties than those of a standard concrete and a lower volume weight. The invention comprises a matrix of cement , water and fibres, preferably glass-fibre waste, to reinforce the stone aggregates. The formulation comprises a type of concrete that is different from those currently available, owing to the formulation, mixture and novel mechanical behabiour thereof.

## Description

### FIELD OF THE INVENTION

The present invention relates to an additive for cement that permits a concrete to be obtained with high mechanical resistance and low volumetric weight, which is achieved by means of adding glass fibres coated in resin and other additives.

### PRIOR ART OF THE INVENTION

The concretes traditionally used in the construction industry currently generally consist of cement, water, coarse aggregate (gravel), fine aggregate (sand) and some additive if it is wished to increase any of their properties such as workability, resistance, setting time, etc.

In order to carry out constructions, the study of composite materials for construction is currently one of the overriding necessities, as a means for obtaining substitutes for various materials which are nowadays scarce and expensive.
The mechanical properties of traditional concretes are reduced in line with their resistance and volumetric weight.

### DESCRIPTION OF THE INVENTION

The main object of this invention is to show the formulation for obtaining a fibre-reinforced concrete with mechanical properties superior to those of a traditional concrete, which, as well as having a lower volumetric weight, is formulated on the basis of cement, water and fibreglass waste, which are used as ultralight aggregates for reinforcement.

The formulation of the concrete forming the object of this present invention consists of a mixture of cement, water and aggregates (fine and coarse) in order to obtain a rocky material with mechanical characteristics to compression, bending, torsion, etc. and physical characteristics similar to rock. In order to manufacture the concrete forming the inventive object, a matrix or binder was chosen, based on water and cement; the cement used was Portland type cement, preferably white.

In the formulation of this concrete fibreglass waste has been used coated with a resin for reinforcement of the aggregates, in order to reduce the volumetric weight and increase the mechanical resistance, homogenised prior to use, in order to guarantee a good distribution of these ultralight aggregates in the concrete paste.

The fibreglass waste has to be coated in resin, whether this be polyester, epoxy or any polyurethane and, in general, any resin, aiming for at least a 50% coating of its surface with the resin, The procedure for this can be any kind, such as laminating, extrusion and even polishing/extrusion. The aspect ratio of this fibreglass waste has to be between 0.5 and 0.9, preferably between 0.25 and 0.5. As an example of fibreglass waste coated in resin, one can use ground fibre from fibreglass trimmings coated in polyester resin, with a real density of 2.7, and a melting point higher than 1700 °C. The manufacturing process is by laminating, following a process of spraying with a spray-gun. The average length of the fibres is 1.89 centimetres. The volumetric weight of the fibre is 215 kg/m3.

The physical and chemical characteristics of the fibreglass waste to be used are: high fibre-matrix adherence (in this case the matrix is cement), electrical characteristics (electrical insulator), dimensional stability, non-combustibility, mechanical resistance (Traction / Density specific resistance greater than for steel), suitability for receiving different wettings, non-rotting, low thermal conductivity and excessive flexibility.
The constituents of the fibreglass waste are 65% SiO2; 4% Al2O3; 5.5% B2O: 14% CaO; 3% MgO; 8% K2O and 0.5% Na2O.

The content of cement is that used in structural applications and with a W/C (water / cement) ratio ranging from 0.05 to 0.7, the optimum being between 0.2 and 0.54, in order to obtain a good workability without using any other kind of aggregate or additive. The setting method was for 28 days with a relative humidity of 30%.

The water/cement ratio has to comply with the following ratios depending on the design resistance required.

For the first ratio which, in this case, is known as F'c for the required design resistance, while the variable A refers to the W/C (water / cement) ratio to be used in the formulation of the concrete forming the object of this invention, This ratio can be useful if it is wished to learn the resistance which a given W/C (water / cement) ratio can have according to this formulation, or otherwise, if it is wished to know what the necessary W/C (water / cement) ratio is for a certain required resistance (F'c).
a) F'c = 4999.78261811 a^4 - 13224.787328 a^3 + 13558.8887004 a^2 - 6968.83294926 a + 1767.98787878.
b) F'c = - 200000000 c^3 + 100000000 c^2 - 200000000 c + 100000000
c) F'c = - 292.91 s^3 + 1130.1 s^2 1418.9 s + 727.11
d) F'c = - 184.7 f^3 + 391,45 f^2 - 229.97 f + 169.23

The second equation (b) establishes the ratio which the Water / Cementing materials have to comply with, where the quantity of cementing materials results from the sum of all elements having a pozzolanic or cementing reaction, and can even harden by means of a hydraulic process, as with cement. These elements can be sands with granulometries that pass through a 350 sieve, as well as all those granular elements with a pozzolanic reaction on the concrete. The variable c represents the Water / Cementing materials ratio.

The third equation (c) establishes the ratio which the Sand / Cement has to comply with, where the quantity of sand to consider will be just that which fails to pass through a 300 sieve, the nature and origin of the sand being of no importance. The variable s represents the Sand / Cement ratio.

The fourth equation (d) establishes the optimum ratio which the Fibre / Cement has to comply with, where the quantity of fibre to consider will be the sum of all the fibres used in the concrete, the nature and origin of the fibre being of no importance. The variable f represents the Fibre / Cement ratio.

The proportions of fibres used for the formulation of the concrete, according to the relations a, b, c and d, the object of the invention, range from a fibre content of 0.5%, which provides an average compression resistance of 280 MPa and an increase in resistance to shear of approximately 64% compared with that of a normal concrete, up to a fibre content of 40%, which provides an average compression resistance of up to 466 MPa and an increase in resistance to shear of 92% compared with that of a normal concrete. The optimum being a fibre content of 20%, which provides an average compression resistance of 352.71 MPa and an increase in resistance to shear of approximately 84% compared with that of a normal concrete. With the cement / fibre ratios ranging from 12.94 to 1.62, the optimum being 3.24. Alternatively, use can be made of polypropylene fibres, kevlar, metallic fibres, aramide fibres, polyester fibres, textile microfibres, glass microfibres, steel fibres, sisal fibres and in general any fibre offering good mechanical behaviour.

For the mixture of the concrete forming the object of the invention, the modulus of elasticity varies between 282000 MPa for a fibre content of 5%, 333000 MPa for fibre content of 20%, and up to 372000 MPa for a fibre content of 40%,

The cement used for the formulation forming the inventive object is Portland cement, preferably of the white type, which is primarily composed of 50% tricalcic silicate, 24% dicalcic silicate, 11 % tricalcic aluminate and 8% tetracalcic ferrous aluminate, with a specific weight of 3.1.

The water used in the mixing is ordinary water. In order to ensure the quality of the water, it is merely necessary to check that it has no coloration or odour.

The method of proportioning the concrete can be adapted to any of the existing methods, always provided that the stated proportions of fibre are respected, and that each of the relations a, b, c and d are met.

The manufacturing process for the formulation of the concrete forming the inventive object is to homogenise the fibres with the cement, first manually, followed by mechanical homogenisation, until a perfect distribution of the fibres in the cement is obtained.

Once the cement is homogenised with the fibres, the necessary quantity of water is added constantly and mixed for the time needed to obtain a manageable mixture.

Once the mixture has been obtained, it is cast, using a compacted method, whether this be manual or mechanical.

The method of setting can be any of those permitted by current regulations on the setting of concrete, preferably 28 days with a humidity of 30%,

In accordance with the description given above, it is possible to affirm that the characteristics of mechanical resistance to compression and volumetric weight, up to 25% less, of the formulation forming the object of the invention, have not been achieved by any other traditional or known concrete.

Having described the invention, we regard it as novel and therefore the content of the following claims is claimed as ours:

## Claims

1. Formulation for obtaining a fibre-reinforced concrete mixture of high mechanical resistance and low volumetric weight, which comprises a matrix of cement-water and fibres, preferably fibreglass waste as reinforcement for the rocky aggregates; the cement being present from 10°/o up to 72% by weight, the optimum being 63%; the water content being from 4% up to 37%, the optimum being 25%; the fibreglass content from 5% up to 40% by weight of cement to use, the optimum being 13%.

2. Formulation for obtaining a fibre-reinforced concrete mixture of high mechanical resistance and low volumetric weight, according to claim 1, **characterised in that** for its formulation the following relations have to be met:
a) F'c = 4999-78261811 a^4 - 13224.787328 a^3 + 13559.8887004 a^2 - 6968.83294926 a + 1767.98787878.
b) F'c = - 200000000 c^3 + 100000000 c^2 - 200000000 c + 100000000
c) F'c = - 292.91 s^3 + 1130.1 s^2 - 1418.9 s + 727.11
d) F'c = - 184.7 f^3 + 391.45 f^2 - 229.97 f + 169.23
where the variable "a" represents the Water / Cement ratio to use in the proportioning of the concrete for a certain mechanical resistance to compression (F'c). The variable "c" represents the ratio Water / Cementing Materials to use in the proportioning of the concrete for a certain mechanical resistance to compression (F'c). The variable "s" represents the ratio Sand / Cement to use in the proportioning of the concrete for a certain mechanical resistance to compression (F'c). The variable "f" represents the ratio Fibre / Cement to use in the proportioning of the concrete for a certain mechanical resistance to compression (F'c).

3. Formulation for obtaining a fibre-reinforced concrete mixture of high mechanical resistance and low volumetric weight, according to claims 1 to 3, **characterised by** having an average compression resistance ranging from 280 MPa up to 466 MPa, depending on the percentage of fibre added and on the nature of them.

4. Formulation for obtaining a fibre-reinforced concrete mixture of high mechanical resistance and low volumetric weight, as claimed in claims 1 and 2, **characterised by** having a shear resistance ranging from 64% up to 92% greater than in a traditional concrete, depending on the percentage of fibre added and on the nature of them.

5. Formulation for obtaining a fibre-reinforced concrete mixture of high mechanical resistance and low volumetric weight, according to the above claims, **characterised by** having an elastic modulus ranging from 282000 MPa up to 372000 MPa, depending on the percentage of fibre added and on the nature of them.

6. Formulation for obtaining a fibre-reinforced concrete mixture of high mechanical resistance and low volumetric weight, according to claim 1, **characterised by** having a volumetric weight ranging from 1000 Kg/m³ up to 2400 Kg/m³, depending on the percentage of fibre added and on the nature of them.

7. A process for the manufacture of the Formulation for obtaining a fibre-reinforced concrete mixture of high mechanical resistance and low volumetric weight, according to claim 1, wherein said process comprises the following stages:
homogenising the fibres with the cement, first manually, followed by mechanical homogenisation, until the distribution of the cement fibres is obtained;
adding the necessary quantity of water constantly and mixing until it is manageable:
casting, using a compacted method, whether this be manual or mechanical; and
allowing the setting to take place for at least 28 days with a humidity of 30%.

8. The concrete obtained from the process of claim 7 and which has the characteristics described in claims 1 to 6.
